(19) Europäisches Patentamt / European Patent Office / Office européen des brevets

(11) **EP 1 756 758 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
***G06K 19/077*** *(2006.01)*

(21) Anmeldenummer: **05756993.1**

(22) Anmeldetag: **18.05.2005**

(86) Internationale Anmeldenummer:
**PCT/DE2005/000906**

(87) Internationale Veröffentlichungsnummer:
**WO 2005/124671 (29.12.2005 Gazette 2005/52)**

(54) **SENDE-/EMPFANGS-EINRICHTUNG**

TRANSCEIVER

DISPOSITIF D'EMISSION/RECEPTION

(84) Benannte Vertragsstaaten:
**DE**

(30) Priorität: **18.06.2004 DE 102004029440**

(43) Veröffentlichungstag der Anmeldung:
**28.02.2007 Patentblatt 2007/09**

(73) Patentinhaber: **Infineon Technologies AG**
**81669 München (DE)**

(72) Erfinder: **KNOLL, Bernhard Theo**
**85579 Neubiberg (DE)**

(74) Vertreter: **Viering, Jentschura & Partner**
**Postfach 22 14 43**
**80504 München (DE)**

(56) Entgegenhaltungen:
- **POBANZ C W ET AL: "Active integrated antennas for microwave wireless systems" SIGNALS, SYSTEMS, AND ELECTRONICS, 1995. ISSSE '95, PROCEEDINGS., 1995 URSI INTERNATIONAL SYMPOSIUM ON SAN FRANCISCO, USA 25-27 OCT. 1995, NEW YORK, NY, USA,IEEE, US, 25. Oktober 1995 (1995-10-25), Seiten 1-4, XP010159164 ISBN: 0-7803-2516-8**
- **ARANEO, R.;CELOZZI, S.: "FE Analysis of a Low-Frequency Microstrip Antenna" IEEE TRANSACTIONS ON MAGNETICS, Bd. 38, Nr. 2, März 2002 (2002-03), Seiten 729-732, XP002341656 in der Anmeldung erwähnt**
- **ANONYMOUS: "Hitachi Develops a New RFID with Embedded Antenna -Chip --Makes Possible Wireless Links that Work Using Nothing More Than a 0.4mm X 0.4mm Chip, One of the World's Smallest ICs--" HITACHI NEWS RELEASES, [Online] 2. September 2003 (2003-09-02), XP002341658 Gefunden im Internet: URL:http://www.hitachi.com/New/cnews/03090 2_030902.pdf> in der Anmeldung erwähnt**
- **USAMI M.: 'An Ultra Small RFID Chip' RADIO FREQUENCY INTEGRATED CIRCUITS (RFIC) SYMPOSIUM 06 Juni 2004, PISCATAWAY, NJ, USA, IEEE, Seiten 241 - 244, XP010713774 ISBN: 0-7803-8333-8**
- **FINKENZELLER KLAUS: 'RFID Handbuch', 26 September 2002, HANSER VERLAG, ISBN 3-466-22071-2 * Seite 123 - Seite 135 ***

**Beschreibung**

Die Erfindung betrifft eine Sende-/Empfangs-Einrichtung.

In der drahtlosen Kommunikation werden Antennen gemäß dem Stand der Technik als eigenständige passive Bauelemente, d.h. als separat von einem Chip vorgesehene Bauelemente, realisiert, die nicht in einem solchen elektronischen Chip integriert sind.

Ein Anwendungsgebiet von Antennen in der drahtlosen Kommunikation sind die sogenannten "radio frequency identification tags" (RFID-Tags)."Radio frequency identification" (RFID), die Identifizierung per Funk, ist ein Verfahren, um kontaktlos Daten lesen bzw. speichern zu können. Solche Daten werden auf RFID-Tags (anschaulich elektronische Etiketten), oft auch Transponder, gespeichert. Die gespeicherten Daten werden mittels elektromagnetischer Wellen gelesen, die über die Antenne in den RFID-Tag eingekoppelt werden können bzw. von der Antenne abgestrahlt werden können. Die Baugröße eines RFID-Tags wird maßgeblich durch die darauf enthaltene Antenne bestimmt und bildet somit einen limitierenden Faktor hinsichtlich der Miniaturisierung von RFID-Tags. Aus dem Stand der Technik bekannte RFID-Tags weisen typischerweise Dimensionen von wenigen Millimetern bis einigen Zentimetern auf.

Anwendungsgebiete für RFID-Tags sind elektronische Warensicherungssysteme zum Unterbinden von Diebstählen, Anwendungen in der Automatisierungstechnik (z.B. die automatische Identifizierung von Fahrzeugen im Verkehr im Rahmen von Mautsystemen), Zugangskontrollsysteme, bargeldloses Zahlen, Skipässe, Tankkarten, die Tierkennzeichnung und Anwendungen in Leihbüchereien.

Ein RFID-Tag enthält üblicherweise eine Antenne, einen Schaltkreis zum Empfangen und Senden elektromagnetischer Wellen (Transponder) und einen SignalverarbeitungsSchaltkreis. Aktive RFID-Tags sind batteriebetrieben, passive RFID tags beziehen ihre Energie zur Übertragung der Information aus den empfangenen Funkwellen.

Die Tatsache, dass Antennen auf RFID-Tags in der Regel als passive Bauelemente, d.h. als nicht-integrierte Schaltkreiskomponenten, realisiert werden, besteht vorwiegend darin, dass der für die Kommunikation erforderliche Energietransfer (Mindest-)Anforderungen an die Länge der Antenne stellt. So nimmt beispielsweise die abgestrahlte Leistung einer Dipolantenne deutlich ab, wenn die Antenne kürzer als $\lambda/4$ wird, wobei $\lambda$ die Wellenlänge der elektromagnetischen Strahlung ist. Auch die mittels Dipol-Dipol-Kopplung bei einer RFID-Anwendung im Nahfeld übertragene Leistung ist um so geringer, je geringer die Dimension der Antenne ist.

Die separate Herstellung einer nicht-integrierten Antenne ist sehr teuer, zusätzlich fallen bei einem Packaging-Prozess weitere Kosten für den Zusammenschluss von Antenne und Chip an. Bei einer RFID-Anwendung verteilen sich die Kosten für Chipfertigung, Antennenherstellung und Packaging zu etwa gleichen Teilen. Eine Integration der Antenne könnte damit die Kosten um mindestens die Hälfte reduzieren.

Aus [1] und [9] ist ein RFID-Chip mit einer integrierten Antenne bekannt, der eine Dimension von 0.4mm x 0.4mm aufweist. Der RFID-Chip weist dabei eine als Spule ausgebildete Antenne auf. Allerdings weist dieser RFID-Chip mit integrierter und somit miniaturisierter Antenne den Nachteil auf, dass er eine extrem schlechte Ankopplung der Antenne an das elektrische Feld eines Lesegeräts aufweist. Dies führt zu einer extrem geringen Reichweite des aus [1] bekannten RFID-Chips mit integrierter Antenne. Der aus [1] bekannte $\mu$-Chip hat zwar eine eingebaute Antenne, die grundsätzlich eine kontaktlose Kommunikation erlaubt, allerdings besteht aufgrund des Vorsehens der Antenne als integriertes und somit sehr klein dimensioniertes Bauelement eine starke Einschränkung für die erreichbaren Entfernungen, über welche die Antenne mit einem Lesegerät kommunizieren kann. Daher ist der aus [1] bekannte RFID-Tag aufgrund der geringen Leistung übertragener Wellen für viele RFID-Anwendungen nicht oder nicht mit ausreichend guter.Qualität einsetzbar.

[2] offenbart eine Finite-Elemente-Analyse als Modell für eine makroskopische Mikrostreifenantenne mit Dimensionen im Bereich von einigen Zentimetern. Für die theoretische Analyse gemäß [2] wird eine Grundebene angenommen, auf der eine ferroelektrische Schicht, auf dieser eine ferrimagnetische Schicht und auf dieser eine Mikrostreifenantenne angeordnet ist. Das ferroelektrische Material und das ferrimagnetische Material werden gemäß [2] eingesetzt, um die Resonanzfrequenz der Antenne abzusenken und so eine Antenne für Niedrigfrequenz-Anwendungen bereitzustellen.

[3] beschreibt ein Halbleitersubstrat mit einem monolithisch integrierten Schaltkreis und mit einer mit dem monolithisch integrierten Schaltkreis gekoppelten Antennenstruktur.

Ferner ist in [4] eine Mikrowellenschaltung beschrieben auf einem Gallium-Arsenid-Substrat. Die Mikrowellenschaltung weist ein Phasenanpassungsnetzwerk und ein Hochfrequenz-Speisungsnetzwerk sowie eine Vielzahl von Schaltungsstrukturen auf, die zur Steuerung der elektrischen Phasenverschiebung in Hochfrequenz-Pfaden über die Schaltung angeschlossen sind.

[5] offenbart einen Mikrowellensender und einen Mikrowellenempfänger mit einem Oszillator, wobei der Mikrowellensender bzw. der Mikrowellenempfänger mehrere IMPATT-Dioden als aktive Vorrichtung aufweist. Ferner ist dort ein Mikrostreifen-Flächenbereich vorgesehen, der im Betrieb als Resonator und gleichzeitig als Antenne wirkt. Die IMPATT-Dioden und der Mikrostreifen-Flächenbereich sind aus dem gleichen Halbleitersubstrat gebildet.

Weiterhin ist aus [6] ein Mikrowellen-Millimeterwellen-Modul mit integrierter Antenne bekannt. Es wird ein Mehrschichtsubstrat aus einer ersten dielektrischen Schicht, einer zweiten dielektrischen Schicht und einer dritten dielektrischen Schicht gebildet. Auf der dritten dielektrischen Schicht wird eine Hochfrequenzkreis-Leitung hergestellt sowie darauf ein Halbleiterchip. Auf einer Seite der zweiten dielektrischen Schicht wird ein Schlitzloch ausgebildet und auf der anderen Seite eine Antennenspeiseleitung. In der ersten dielektrischen Schicht ist eine Anzahl von Schlitzlöchern ausgebildet, die elektromagnetische Wellen abstrahlen. Mittels einer Kleberschicht wird ein organisches Substrat auf das Mehrschichtsubstrat auflaminiert.

[7] beschreibt einen Radiofrequenz-Identifikations-Tag-Schaltkreis mit einer eingebetteten Antennenspule. Die Antennenspule weist zwei auf gegenüberliegenden Seiten eines Substrats aufgedruckte Wicklungen auf. Die Leitungen der ersten Wicklung und die Leitungen der zweiten Wicklung sind voneinander versetzt, um parasitäre Kapazitäten zwischen den Wicklungen zu verringern.

[8] offenbart eine aktive integrierte Antenne auf einem Substrat, die mit dem Signalverarbeitungsschaltkreis integriert ist, um die Größe und Herstellungskosten zu verringern.

Der Erfindung liegt insbesondere das Problem zugrunde, eine Sende-/Empfangs-Einrichtung bereitzustellen, mit der eine ausreichend große elektromagnetische Leistung übertragbar ist und die miniaturisierbar und mit vertretbarem Aufwand fertigbar ist.

Dieses Problem wird durch eine Sende-/Empfangs-Einrichtung mit den Merkmalen gemäß dem unabhängigen Patentanspruch gelöst.

Eine Sende-/Empfangs-Einrichtung enthält ein Substrat mit einer Schicht aus ferroektrischem Material und/oder mit magnetischem Material mit einer magnetischen Permeabilitätszahl größer eins, und enthält ferner eine in dem Substrat monolithisch integrierte Antenne, welche die Schicht aus ferroelektrischem Material und/ oder magnetischem Material aufweist, welche Antenne zum Senden und zum Empfangen von Signalen eingerichtet ist. Ferner weist die Sende-/Empfangs-Einrichtung einen in dem Substrat monolithisch integrierten Schaltkreis auf, der mit der monolithisch integrierten Antenne gekoppelt ist.

Eine Grundidee der Erfindung ist darin zu sehen, eine Sende-/Empfangs-Einrichtung mit einer in einem Substrat monolithisch integrierten Antenne bereitzustellen, bei welcher Antenne ohne Erhöhung der geometrischen Dimension eine effektive (d.h. elektromagnetisch wirksame) Antennenverlängerung dadurch realisiert ist, dass Material mit einer ausreichend hohen Dielektrizitätszahl bzw. mit einer ausreichend hohen Permeabilitätszahl an oder im Inneren der Antenne, d.h. in ihrem unmittelbaren Umgebungsbereich, gebildet ist. Indem dielektrisches bzw. magnetisches Material in einem Umgebungsbereich der monolithisch integrierten Antenne gebildet ist, kann die effektive Antennenlänge wirksam erhöht werden und simultan eine geringe Strukturdimension der Sende-/Empfangs-Einrichtung realisiert werden. Anders ausgedrückt wird mit einer miniaturisierten monolithisch integrierten Antenne eine Struktur geschaffen, die hinsichtlich ihrer elektromagnetischen Eigenschaften eine ähnliche Funktionalität aufweist wie eine von dielektrischem/magnetischem Material freie größere Antenne. Auf diese Weise ist eine gute Leistungsfähigkeit (insbesondere eine ausreichend große elektromagnetische Leistungsübertragung bei der Kommunikation der Sende-/Empfangs-Einrichtung mit einer korrespondierenden Empfangs-/Sende-Einrichtung, z.B. mit dem Lesegerät für eine als RFID-Tag ausgestaltete Sende-/Empfangs-Einrichtung) bei einer geringen geometrischen Größe der monolithisch integrierten Antenne sichergestellt. Aufgrund dieser Eigenschaften eignet sich die erfindungsgemäße Sende-/Empfangs-Einrichtung insbesondere für die Herstellung miniaturisierter RFID-Tags.

Die Erfindung realisiert somit eine effektive elektromagnetische Antennenverlängerung bei gleichbleibender geometrischer Länge durch das Vorsehen von Material (z.B. Trägerschichten) mit ausreichend hoher relativer Dielektrizitätszahl $\varepsilon_r$ bzw. ausreichend hoher magnetischer Permeabilität $\mu_r$. Dadurch wird die elektromagnetische Antennenwirkung deutlich verbessert bzw. verstärkt, und zwar ohne geometrische Verlängerung der durch die Chipgröße vorgegebenen Antennenlänge.

Für den Herstellungsprozess bedeutet die erfindungsgemäße Realisierung einer Sende-/Empfangs-Einrichtung lediglich die Einführung einer zusätzlichen Ebene bei der parallelen Chipfertigung (zum Bilden des dielektrischen/magnetischen Materials), wobei im Gegenzug die teure Herstellung einer externen Antenne und der aufwendige serielle Zusammenbau von Antenne und Chip entbehrlich wird. Dadurch werden die Gesamtherstellungskosten der Sende-/Empfangs-Einrichtung stark abgesenkt, die Kostenersparnisse liegen bei 50% und mehr.

Für eine parallel auf einem Substrat angeordnete Antenne ist die elektromagnetisch wirksame, d.h. effektive Antennenlänge $L_{eff}$ gegeben durch Gleichung (1) :

$$L_{eff} = L\sqrt{\varepsilon_r \mu_r} \qquad (1)$$

In Gleichung (1) ist L ist geometrische Antennelänge, $\varepsilon_r$ die relative Dielektrizitätszahl der dielektrischen (z.B. ferroelektrischen) Schicht, und $\mu_r$ die magnetische Permeabilitätszahl der magnetischen Schicht (z.B. einer Ferritschicht).

Die effektive Antennenlänge $L_{eff}$ kann also bei ausreichend großer Dielektrizitätszahl $\varepsilon_r$ bzw. bei ausreichend großer magnetischer Permeabilitätszahl $\mu_r$ erheblich größer sein als die geometrische Größe L. Die Dielektrizitätszahl bzw. die magnetische Permeabilitätszahl können von der Frequenz elektromagnetischer Strahlung abhängig sein. Dies gilt sowohl für den Absolutwert dieser beiden Zahlen als auch für ihren Imaginärteil und somit für die im Betrieb auftretenden Verluste.

Beispielsweise kann mit ferroelektrischen Filmen aus Barium-Strontium-Titanat (BST) für ausreichend niedrige Frequenzen (z.B. 125kHz) eine Dielektrizitätszahl im Bereich von tausend erhalten werden, mit einer Ferritschicht kann eine magnetische Permeabilitätszahl von einigen Hundert erreicht werden. Dadurch ergibt sich für die elektrisch wirksame Antenne eine zum Beispiel fünfhundertfache Effektiv-Verlängerung gegenüber der tatsächlichen Antennendimension.

Bevorzugte Ausgestaltungen der Erfindung ergeben sich aus den abhängigen Ansprüchen.

Das Substrat ist ein elektronischer Chip sein. Das Substrat kann ein Silizium-Substrat, insbesondere ein Silizium-Chip sein. Ein Schaltkreis, der in die Antenne eingekoppelte Signale verarbeitet bzw. welcher Signale an die Antenne zum Abstrahlen bereitstellt, kann in dem elektronischen Chip monolithisch integriert sein.

Die Antenne ist als Mikrostreifenantenne realisiert. Das Bilden einer Mikrostreifenantenne ist zum Beispiel in [2] beschrieben.

Die Antenne weist eine elektrisch leitfähige Schicht auf der Schicht aus dem dielektrischen Material und/oder dem magnetischen Material auf.

Ferner weist die Antenne eine zusätzliche elektrisch leitfähige Schicht auf dem Substrat und unterhalb der Schicht aus dem dielektrischen Material und/oder dem magnetischen Material auf.

Gemäß einer Ausgestaltung der Antenne mit einer elektrisch leitfähigen Schicht und einer zusätzlichen elektrisch leitfähigen Schicht können das dielektrische Material und/oder das magnetische Material als Schichten bzw. Strukturen zwischen der elektrisch leitfähigen Schicht und der zusätzlichen elektrisch leitfähigen Schicht in einer sandwichartigen Struktur vorgesehen sein.

Die zusätzliche elektrisch leitfähige Schicht ist als oberste Metallisierungsebene des als elektronischer Chip realisierten Substrats gebildet.

Demgemäß ist die untere Metallschicht der Antenne in der obersten Metallisierungsebene des Chips implementiert bzw. als Teil davon gebildet. In einer nicht beanspruchten Alternative kann die untere Metallschicht auch auf einem fertig prozessierten Chip separat aufgebracht werden.

Die Schicht aus dem dielektrischen Material kann als Schicht oberhalb der zusätzlichen elektrisch leitfähigen Schicht und unterhalb der elektrisch leitfähigen Schicht gebildet sein.

Die Schicht aus dem magnetischen Material kann als Schicht oberhalb der zusätzlichen elektrisch leitfähigen Schicht und unterhalb der elektrisch leitfähigen Schicht gebildet sein.

Das dielektrische Material kann eine permanente elektrische Polarisation auch in Abwesenheit eines externen elektrischen Feldes aufweisen. Mit anderen Worten ist das dielektrische Material gemäß dieser Ausgestaltung so ausgeführt, dass auch ohne ein äußeres elektrisches Feld eine permanente, d.h. dauerhafte Polarisation dieses Materials vorliegt.

Das dielektrische Material kann insbesondere ein ferroelektrisches Material oder ein ferrielektrisches Material aufweisen. Unter einem ferroelektrischen Material wird insbesondere ein Material verstanden, bei dem die atomaren Dipolmomente im Wesentlichen alle eine gemeinsame Richtungskomponente aufweisen. Ein ferrielektrisches Material enthält permanente elektrische Dipole mit einer ersten Orientierung und solche mit einer zweiten, zu der ersten Orientierung entgegengesetzten Orientierung, wobei die Beträge der elektrischen Dipole einander nur teilweise kompensieren, so dass im Ergebnis eine dauerhafte elektrische Polarisation auch in Abwesenheit eines elektrisches Feldes erreicht ist.

Das dielektrische Material kann z.B. Barium-Strontium-Titanat (BST) aufweisen.

Das magnetische Material kann ein permanentmagnetisches Material aufweisen. Unter einem permanentmagnetischen Material wird insbesondere ein Material verstanden, das auch in Abwesenheit eines externen magnetischen Feldes ein magnetisches Dipolmoment aufweist, d.h. eine resultierende Magnetisierung.

Insbesondere kann das magnetische Material ein ferromagnetisches Material oder ein ferrimagnetisches Material aufweisen. Bei einem ferromagnetischen Material weisen die atomaren magnetischen Dipolmomente alle eine gemeinsame Richtungskomponente auf. Ein ferrimagnetisches Material enthält permanente magnetische Dipole mit einer ersten Orientierung und solche mit einer zweiten, zu der ersten Orientierung entgegengesetzten Orientierung, wobei die Beträge der magnetischen Dipole einander nur teilweise kompensieren, so dass im Ergebnis eine dauerhafte Magnetisierung auch in Abwesenheit eines (externen) magnetischen Feldes erreicht ist.

Das magnetische Material kann insbesondere Ferrit aufweisen. Ein Ferrit ist ein ferromagnetischer Werkstoff, insbesondere aus elektrisch nicht gut leitendem Metalloxid.

Die Antenne und die Schicht aus dem dielektrischen Material und/oder dem magnetischen Material können entweder auf der Vorderseite oder auf der Rückseite des Chips gebildet sein. Bei einer Bildung dieser Komponenten auf der Vorderseite des Chips, d.h. in der Nähe eines integrierten Schaltkreises, der in einem Oberflächenbereich des Chips gebildet ist, sind kurze Signalwege zwischen Antenne und elektrischen Schaltkreiskomponenten realisiert. Andererseits ermöglicht das Bilden von Antenne, des dielektrischen Materials und/oder des magnetischen Materials auf der Chip-Rückseite eine höhere Flexibilität beim Kontaktieren der Chip-Vorderseite. Zu berücksichtigen ist bei der Wahl der Anordnung der Komponenten auf der Vorderseite oder der Rückseite des Chips die Realisierbarkeit der Antennenkontaktierung.

Ferner kann bei der Sende-/Empfangs-Einrichtung ein Trägerelement vorgesehen sein, auf und/oder unter dem das Substrat angeordnet ist. Das Trägerelement kann z.B. ein Kunststoffträger sein.

Insbesondere kann die Sende-/Empfangs-Einrichtung als kontaktlose Chipkarte oder Identifikationsdatenträger ("ID-Tag", insbesondere als RFID-Datenträger, z.B. ein Transponder) eingerichtet sein. Auf diesen Anwendungsgebieten kommen die Vorteile der Sende-/Empfangs-Einrichtung der Erfindung besonders stark zum Tragen, nämlich ein einfacher Aufbau, eine kostengünstige Herstellbarkeit und eine ausreichend gute und verlustarme Funktionalität beim Empfangen und Senden von elektromagnetischen Wellen.

Anschaulich kann eine Antenne insbesondere als eine elektromagnetische LC-Anordnung angesehen werden, d.h. als eine Art elektromagnetischer Schwingkreis. Die Antenne kann induktivitätsdominiert oder kapazitätsdominiert sein, je nachdem ob in dem LC-Glied die Kapazität C oder die Induktivität L die dominierende Einflussgröße ist.

Ein Ausführungsbeispiel der Erfindung ist in den Figuren dargestellt und wird im Weiteren näher erläutert.

Es zeigt:

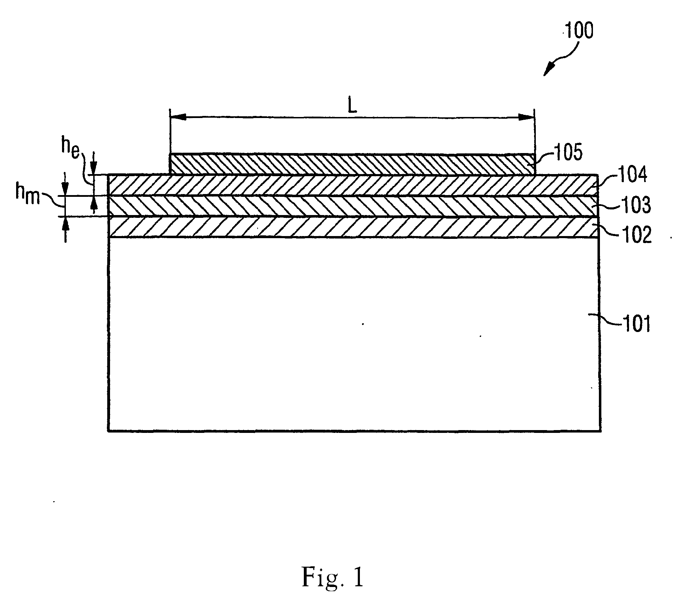

Figur 1      eine Sende-/Empfangs-Einrichtung gemäß einem bevorzugten Ausführungsbeispiel der Erfindung.

Die Darstellungen in der Figur sind schematisch nicht maßstäblich.

Im Weiteren wird bezugnehmend auf **Fig.1** eine Sende-/Empfangs-Einrichtung 100 gemäß einem bevorzugten Ausführungsbeispiel der Erfindung beschrieben.

Die Sende-/Empfangs-Einrichtung 100 enthält einen Silizium-Chip 101, auf welchem eine untere Antennen-Metallschicht 102 gebildet ist. Auf der unteren Antennen-Metallschicht 102 ist eine Ferrit-Schicht 103 mit einem hohen Wert der magnetischen Permeabilitätszahl gebildet. Auf der Ferrit-Schicht 103 ist eine Ferroelektrikums-Schicht 104 mit einem hohen Wert der Dielektrizitätszahl gebildet. Auf der Ferroelektrikums-Schicht 104 ist eine obere Antennen-Metallschicht 105 gebildet. Die Antenne 102, 105 ist als eine Mikrostreifenantenne ausgeführt.

In bzw. auf dem Silizium-Chip 101 ist somit eine monolithisch integrierte Antenne 102, 105 vorgesehen, die zum Senden und Empfangen von Signalen in Form von elektromagnetischen Wellen eingerichtet ist. Ferner ist bei der Sende-/Empfangs-Einrichtung 100 ein (in Fig. 1 nicht gezeigter) in dem Silizium-Substrat 101 monolithisch integrierter Schaltkreis vorgesehen, der mit der monolithisch integrierten Antenne 102, 105 gekoppelt ist. Zwischen dem monolithisch integrierten Schaltkreis und der Antenne 102, 105 können elektrische Signale ausgetauscht werden. Insbesondere ist die Antenne dazu eingerichtet, ein elektromagnetisches Signal zu empfangen und dem monolithisch integrierten Schaltkreis zur Verarbeitung bereitzustellen. Ferner kann der monolithisch integrierte Schaltkreis der Antenne ein Signal bereitstellen, welches diese abstrahlt, wobei dieses abgestrahlte Signal von einem Lesegerät (nicht gezeigt in der Figur) empfangen werden kann. Zwischen dem Lesegerät und der als RFID-Tag ausgestalteten Sende-/Empfangs-Einrichtung 100 ist somit eine Kommunikation via elektromagnetischer Wellen ermöglicht.

Aufgrund des Vorsehens der Ferrit-Schicht 103 und der Ferroelektrikums-Schicht 104 wird entsprechend Gleichung (1) die effektive Länge $L_{eff}$ der Antenne 102, 105 gegenüber der geometrischen Antennenlänge L deutlich vergrößert. $\varepsilon_r$ ist die Dielektrizitätskonstante der Ferroelektrikums-Schicht 104. $\mu_r$ ist die magnetische Permeabilitätszahl der Ferrit-Schicht 103.

Alternativ zu der Anordnung in Fig.1 kann auch die Ferrit-Schicht 102 oberhalb der Ferroelektrikums-Schicht 104 vorgesehen sein. Wie in Fig.1 gezeigt, sind die Antenne 102, 105, die Ferroelektrikums-Schicht 104 und die Ferrit-Schicht 103 auf der Vorderseite (Oberseite) des Chips 101 gebildet. Mit anderen Worten ist der integrierte Schaltkreis in einem gemäß Fig.1 oberen Oberflächenbereich des Silizium-Chips 101 integriert und somit in unmittelbarer Nachbarschaft zu der Antenne 102, 105 vorgesehen. Dadurch sind die Signalwege kurz gehalten, so dass nur eine geringe Energiedissipation beim Signaltransfer zu verzeichnen ist. Eine energiearme Betreibbarkeit ist bei dem Einsatz der Sende-/Empfangs-Einrichtung als RFID-Tag besonders vorteilhaft.

Fig.1 zeigt eine Anordnung, bei der die Antenne 102, 105 durch Verwendung von Substraten mit hohen Dielektrizitätszahlen (z.B. Ferroelektrika) bzw. hohen Permeabilitäten (z.B. Ferriten) integriert vorsehbar ist und dennoch ausreichend große elektromagnetische Leistungen übertragen kann.

Bei dem in Fig.1 gezeigten Aufbau einer Sende-/Empfangs-Einrichtung 100 mit einer erfindungsgemäßen Antenne 102, 105 ist die Antenne als Mikrostreifenantenne ausgeführt. Die ferroelektrische Schicht 104 und die Ferrit-Schicht 103 befinden sich zwischen der oberen Antenne-Metallschicht 105 und der darunter liegenden Gegenelektrode 102 (auch aus Metall-Material). Die Schichtdicken $h_e$ der ferroelektrischen Schicht 104 und $h_m$ der Ferrit-Schicht 103 sind vorzugsweise wesentlich kleiner als die Antennenbreite L.

Die in Fig.1 gezeigten Schichten 103 bis 105 können auf dem fertig prozessierten Silizium-Chip 101 aufgebracht werden. Die untere Metallschicht 102 der Antenne ist in der obersten Metallisierungsebene des Chips 101 implementiert. Möglich ist auch eine umgekehrte Schichtenfolge der Schichten 103, 104 oder die Aufbringung der Schichten auf der Chip-Rückseite. Zu berücksichtigen ist jeweils die Realisierbarkeit der Antennenkontaktierung.

In diesem Dokument sind folgende Veröffentlichungen zitiert:

[1] http://www.hitachi.com/New/cnews/030902.html;

[2] Araneo, R, Celozzi, S (2002) "FE Analysis of a Low-Frequency Microstrip Antenna", IEEE Transactions on Magnetics, Band 38, Nr. 2, Seiten 729-732;

[3] DE 36 13 258 A1;

[4] EP 0 055 324 B1;

[5] EP 0 296 838 B1;

[6] DE 101 18 742 A1;

[7] EP 0 743 615 B1;

[8] Pobanz, C.W. "Active integrated antennas for microwave wireless systems", Signals, Systems, and Electronics 1995, ISSSE '95, Proceedings, 1995 URSI International Symposium on San Francisco, USA 25-27 Oct. 1995, New York, NY, USA, IEEE, US, 25. Oktober 1995, Seiten 1-4

[9] M. Usami, IEEE Radio Frequency Integrated Ciruits Symposium (2004), "An Ultra Small RFID Chip: μ-Chip", Sieten 241-244.

**Bezugszeichenliste**

| | |
|---|---|
| 100 | Sende-/Empfangs-Einrichtung |
| 101 | Silizium-Chip |
| 102 | untere Antennen-Metallschicht |
| 103 | Ferrit-Schicht |
| 104 | Ferroelektrikums-Schicht |
| 105 | obere Antennen-Metallschicht |

**Patentansprüche**

1. Sende-Empfangsvorrichtung,

   • mit einem Substrat; mit einer Schicht aus ferroelektrischem Material oder ferrielektrischem Material und mit einer Schicht aus ferromagnetischem Material oder ferrimagnetischem Material, wobei das Substrat ein elektronischer Chip ist;
   • mit einer auf dem Substrat und mit dem Substrat monolithisch integrierten Mikrostreifen-Antenne auf einer der Schichten aus der Schicht aus ferroelektrischem Material oder ferrielektrischem Material der Schicht aus ferromagnetischem Material oder ferrimagnetischem Material, welche Antenne zum Senden und zum Empfangen von Signalen eingerichtet ist;
   • mit einem in dem Substrat monolithisch integrierten Schaltkreis, der mit der monolithisch integrierten Antenne gekoppelt ist;
   • bei der die Antenne eine elektrisch leitfähige Schicht auf der Schicht aus ferroelektrischem Material oder ferrielektrischem Material oder der Schicht aus ferromagnetischem Material oder ferrimagnetischem Material aufweist; und
   • bei der die Antenne eine zusätzliche elektrisch leitfähige Schicht auf dem Substrat und unterhalb der Schicht aus ferroelektrischem Material oder ferrielektrischem Material oder der Schicht aus ferromagnetischem Material oder ferrimagnetischem Material aufweist;
   • wobei die zusätzliche elektrisch leitfähige Schicht als oberste Metallisierungsebene des als elektrischer Chip realisierten Substrats gebildet ist.

2. Sende-Empfangsvorrichtung nach Anspruch 1, bei der das ferroelektrische Material oder ferrielektrische Material eine permanente elektrische Polarisation auch in Abwesenheit eines externen elektrischen Felds aufweist.

3. Sende-Empfangsvorrichtung nach einem der Ansprüche 1 oder 2, bei der das ferroelektrische Material oder ferrielektrische Material Barium-Strontium-Titanat aufweist.

4. Sende-Empfangsvorrichtung nach einem der Ansprüche 1 bis 3, bei der das ferromagnetische Material oder ferrimagnetische Material ein permanentmagnetisches Material aufweist.

5. Sende-Empfangsvorrichtung nach einem der Ansprüche 1 bis 4, bei der das ferromagnetische Material Ferrit aufweist.

6. Sende-Empfangsvorrichtung nach einem der Ansprüche 1 bis 5, bei der die Antenne und die Schicht aus ferroelektrischem Material oder ferrielektrischem Material und die Schicht aus ferromagnetischem Material oder ferrimagnetischem Material auf

   • der Vorderseite oder
   • der Rückseite

   des elektronischen Chips gebildet ist.

7. Sende-Empfangsvorrichtung nach einem der Ansprüche 1 bis 6, mit einem Träger-Element, auf und/oder in dem das Substrat angeordnet ist.

**8.** Sende-Empfangsvorrichtung nach einem der Ansprüche 1 bis 7,
eingerichtet als

- Kontaktlose Chipkarte; oder
- Identifikations-Datenträger.

**Claims**

**1.** A transceiver device

- with a substrate; with a layer of ferroelectric material or ferrielectric material and with a layer of ferromagnetic material or ferrimagnetic material, wherein the substrate is an electronic chip;
- with a microstrip antenna monolithically integrated on the substrate and with the substrate on one of the layers out of the layer of ferroelectric material or ferrielectric material and the layer of ferromagnetic material or ferrimagnetic material, which antenna is arranged for transmitting and for receiving signals;
- with a circuit monolithically integrated in the substrate which is coupled to the monolithically integrated antenna;
- in which the antenna has an electrically conductive layer on the layer of ferroelectric material or ferrielectric material or the layer of ferromagnetic material or ferrimagnetic material; and
- in which the antenna has an additional electrically conductive layer on the substrate and underneath the layer of ferroelectric material or ferrielectric material or the layer of ferromagnetic material or ferrimagnetic material;
- wherein the additional electrically conductive layer is formed as the topmost metallization plane of the substrate implemented as electrical chip.

**2.** The transceiver device according to claim 1,
in which the ferroelectric material or ferrielectric material has a permanent electrical polarization even in the absence of an external electrical field.

**3.** The transceiver device according to one of claims 1 or 2,
in which the ferroelectric material or ferrielectric material comprises barium strontium titanate.

**4.** The transceiver device according to one of claims 1 to 3,
in which the ferromagnetic material or ferrimagnetic material comprises a permanent magnetic material.

**5.** The transceiver device according to one of claims 1 to 4,
in which the ferromagnetic material comprises ferrite.

**6.** The transceiver device according to one of claims 1 to 5,
in which the antenna and the layer of ferroelectric material or ferrielectric material and the layer of ferromagnetic material or ferrimagnetic material is formed on

- the front or
- the rear

of the electronic chip.

**7.** The transceiver device according to one of claims 1 to 6,
with a support element on and/or in which the substrate is arranged.

**8.** The transceiver device according to one of claims 1 to 7,
arranged as

- contactless chip card; or
- identification tag.

**Revendications**

**1.** Dispositif d'émission-réception

- comprenant un substrat ; comprenant une couche de matériau ferroélectrique ou de matériau ferriélectrique et une couche de matériau ferromagnétique ou de matériau ferrimagnétique, le substrat étant une puce électronique ;
- comprenant, sur le substrat et intégré monolithiquement au substrat, une antenne microbande sur l'une des couches composée de la couche de matériau ferroélectrique ou de matériau ferriélectrique et de la couche de matériau ferromagnétique ou de matériau ferrimagnétique, antenne qui est agencée pour émettre et recevoir des signaux ;
- comprenant un circuit qui est intégré monolithiquement au substrat et qui est couplé à l'antenne intégrée monolithiquement ;
- dans lequel l'antenne a une couche conductrice de l'électricité sur la couche en matériau ferroélectrique ou en matériau ferriélectrique ou sur la couche en matériau ferromagnétique ou en matériau ferrimagnétique ;
- dans lequel l'antenne a une couche conductrice de l'électricité supplémentaire sur le substrat et en dessous de la couche en matériau ferroélectrique ou en matériau ferriélectrique ou de la couche en matériau ferromagnétique ou en matériau ferrimagnétique ;

• dans lequel la couche conductrice de l'électricité supplémentaire est formée en plan de métallisation le plus haut du substrat réalisé en puce électrique.

**2.** Dispositif d'émission-réception suivant la revendication 1, dans lequel le matériau ferroélectrique ou le matériau ferriélectrique a une polarisation électrique permanente, même en l'absence d'un champ électrique extérieur.

**3.** Dispositif d'émission-réception suivant l'une des revendications 1 ou 2 , dans lequel le matériau ferroélectrique ou le matériau ferriélectrique comporte du titanate de baryum et de strontium.

**4.** Dispositif d'émission-réception suivant l'une des revendications 1 à 3, dans lequel le matériau ferromagnétique ou le matériau ferrimagnétique comporte un matériau à magnétisme permanent.

**5.** Dispositif d'émission-réception suivant l'une des revendications 1 à 4, dans lequel le matériau ferromagnétique comporte un ferrite.

**6.** Dispositif d'émission-réception suivant l'une des revendications 1 à 5, dans lequel l'antenne et la couche en matériau ferroélectrique ou en matériau ferriélectrique et la couche en matériau ferromagnétique ou en matériau ferrimagnétique sont formés sur

• la face avant ou
• la face arrière

de la puce électronique.

**7.** Dispositif d'émission-réception suivant l'une des revendications 1 à 6,
comprenant un élément de support sur et/ou dans lequel est disposé le substrat.

**8.** Dispositif d'émission-réception suivant l'une des revendications 1 à 7, agencé en

• carte à puce sans contact ; ou
• support de données d'identification.

Fig. 1

**IN DER BESCHREIBUNG AUFGEFÜHRTE DOKUMENTE**

**In der Beschreibung aufgeführte Patentdokumente**

- DE 3613258 A1
- EP 0055324 B1
- EP 0296838 B1
- DE 10118742 A1
- EP 0743615 B1

**In der Beschreibung aufgeführte Nicht-Patentliteratur**

- **Araneo, R ; Celozzi, S.** FE Analysis of a Low-Frequency Microstrip Antenna. *IEEE Transactions on Magnetics,* 2002, vol. 38 (2), 729-732
- **Pobanz, C.W.** Active integrated antennas for microwave wireless systems. *Signals, Systems, and Electronics 1995, ISSSE '95, Proceedings, 1995 URSI International Symposium on San Francisco,* 25. Oktober 1995, 1-4
- **M. Usami.** An Ultra Small RFID Chip: μ-Chip. *IEEE Radio Frequency Integrated Ciruits Symposium,* 2004, 241-244